# EUROPEAN PATENT SPECIFICATION

(11) **EP 3 770 024 B1**
(45) Date of publication and mention of the grant of the patent: **24.04.2024**
(21) Application number: 19461560.5
(22) Date of filing: 23.07.2019
(51) Int. Cl.: B60R 19/52

(54) **A PROTECTION SYSTEM FOR A HEAT EXCHANGER**
SCHUTZSYSTEM FÜR EINEN WÄRMETAUSCHER
SYSTÈME DE PROTECTION POUR ÉCHANGEUR DE CHALEUR

(43) Date of publication of application: 27.01.2021
(73) Proprietor: Valeo Autosystemy SP. Z.O.O., 32-050 Skawina (PL)
(72) Inventor: SZOSTEK, Dawid, 32-050 SKAWINA (PL); GODZINA, Radoslaw, 32-050 SKAWINA (PL); WATOR, Tomasz, 32-050 SKAWINA (PL); BARUS, Lukasz, 32-050 SKAWINA (PL); JURKIEWICZ, Damian, 32-050 SKAWINA (PL); NAWROCKI, Mateusz, 32-050 SKAWINA (PL)
(74) Representative: Valeo Systèmes Thermiques

(56) References cited:
- WO-A1-2018/202631
- CN-U- 208 952 713
- FR-A1- 3 066 012

## Description

The present disclosure relates to a heat exchanger system, particularly, the present disclosure relates to a protection system for protecting a heat exchanger of a vehicle against impact from heavier articles such as stones, gravel, and the likes.

FR 3 066 012 Al discloses a protection system for protecting a heat exchanger of a vehicle.

A vehicle includes several heat exchanger elements. Conventionally, an engine cooling system of a vehicle includes a heat exchanger in form of a radiator to facilitate cooling of an engine of the vehicle. Specifically, a coolant in form of glycol or water-glycol mixture is passed through the engine, from where the coolant absorbs heat and becomes hot. The hot coolant is then fed into an inlet tank of the radiator that is located either on top of the radiator or along one side of the radiator, from the inlet tank the hot coolant is distributed across a radiator core through radiator tubes to another tank on an opposite end of the radiator. As the hot coolant passes through the radiator tubes to the opposite tank, the coolant transfers heat to the radiator tubes of the radiator core, which in turn, transfers the heat to fins that are lodged between each row of radiator tubes. The fins then release the heat to the ambient air that flows across the radiator core. For effective and efficient performance of the radiator, there should be unhindered supply of ambient air to the radiator core. In order to save the power consumption in the vehicle, natural draft of air across the radiator core is utilized. For achieving natural draft of air across the radiator core, the radiator core is disposed behind a front grill of the vehicle, wherein the front grill is disposed between a front hood and a front bumper of the vehicle such that the ram air impinges on the front grille of the vehicle as the vehicle moves in forward direction. Such strategic placement of the radiator core enables the ram air to impinge on and pass through the radiator core disposed behind the front grille, thereby creating natural draft of air across the radiator core as the vehicle moves ahead in the forward direction. The engine cooling system often incorporates one or more fans disposed behind the radiator core to generate a forced draft of air that facilities passage of air through the radiator core. The forced draft generated by the fans improves the performance and efficiency of the radiator by improving the air flow rate through the radiator by increasing the air speed. The radiator may be disposed either alone or in series with other heat exchange elements such as for example, a condenser, a chiller or any other heat exchanger that require draft of air for efficient operation thereof. Also, the sequence in which the radiator, condenser, chillers or any other heat exchanger are disposed may vary, for example, sometimes the radiator is at the front to first receive the ram air and in other cases the condenser is at the front to first receive the ram air. The position of the radiator and the condenser can interchange.

However, when the vehicle is travelling in off-road conditions or over a rough terrain, heavier articles such as stones, gravel, and the likes may approach the vehicle, cross the front grill through gaps between elements of the front grill and strike a front face of the heat exchanger core, such as for example, radiator core or condenser core. As a result, the heavier article may cause damage to, particularly, may cause cracks in the heat exchange tubes carrying heat exchange fluid there through. The cracks may cause leakage of the heat exchange fluid through the tubes. The continuous leakage of the heat exchange fluid from the heat exchange tubes may result in problems such as pressure loss inside the heat exchanger tubes, heat exchanger tank requiring frequent refilling and inefficient operation of the heat exchanger due to insufficient heat exchange fluid. Conditions such as dropping of heat exchange fluid levels in the heat exchanger, for example radiator below critical level may render the radiator inefficient, thereby resulting in engine seizure due to excessive heat. The cracks may also act as points of stress concentration, thereby may cause mechanical failure of the radiator. In case the heavier articles strike the delicate fin elements disposed between adjacent tubular elements, the fin elements may get damaged and not function as per design, thereby deteriorating efficiency and performance of the heat exchanger. Further, lighter articles such as paper, empty polythene bags, leaves and the likes carried with the ram air may get accumulated at the front face of the heat exchanger core, causing hindrance to air flow and preventing ram air from reaching and moving across the radiator or condenser core, thereby deteriorating efficiency and performance of the radiator or condenser.

Accordingly, there is a need for a protection system that not only protects the heat exchanger core such as radiator and/or condenser core against impact of heavier articles such as stones, gravel, and the likes but also maintains efficiency and performance of the radiator and/or condenser. Further, there is a need for protection system that is adjustable and that can be applied on different sized heat exchanger cores for protection thereof. Still further, there is a need for a protection system that acts as a barrier in front of the radiator or condenser core and prevents heavier article such as stones, gravel, and the likes from impacting and damaging the radiator and/or condenser core, while still not compromising air flow through the radiator or condenser core. Still further, there is a need for a protective system that prevents lighter articles from causing hindrance to air flow to radiator or condenser while still maintaining the efficiency and performance of the radiator or condenser. Still further, there is a need for a protective system that is stably held in place away from the radiator or condenser and prevents noise generation due to vibrations or hard to hard contact between the elements of the protective system and the radiator or the condenser. Yet another object of the present invention is to provide a protection system that can be conveniently and quickly configured or assembled or retrofitted on the heat exchanger without requiring any dedicated tools for configuring the assembly. Yet another object of the present invention is to provide a protection system that forms a secure connection with the heat exchanger core. Still another object of the present invention is to provide a protection system that enhances service life and reliability of the heat exchanger core. Yet another object of the present invention is to provide a protection system that is easily replaceable and requires less maintenance. Still another object of the present invention is to provide a protection system that effectively dissipates high impact energy of the heavier article before the heavier article incase hits the heat exchanger core.

An object of the present invention is to provide a protection system that acts as a barrier to protect a heat exchanger core, particularly, a radiator core and/or condenser core against damage from impact of heavier articles such as stones, gravel, and the likes, while still not compromising air flow through the radiator or condenser core.

An object of the present invention is to provide a protection system that can be mounted on different sized heat exchanger cores for protecting the different sized heat exchanger cores.

Still another object of the present invention is to provide a protection system that can be easily retrofitted over current radiators and /or condensers without requiring any modifications in the current radiators and /or condensers and without requiring dedicated tools for the assembly.

Another object of the present invention is to provide a protection system that can be maintained in a spaced configuration with respect to the heat exchanger core, thereby preventing noise generation caused by hard to hard contact during vibrations and also effectively dissipating high impact energy of the heavier article before the heavier article incase hits the heat exchanger core.

Another object of the present invention is to provide a protection system that enhances service life of a heat exchanger such as a radiator and/or condenser and reduces maintenance thereof.

Yet another object of the present invention is to provide a protection system that is inexpensive and also convenient to manufacture, assemble and use.

Still another object of the present invention is to provide a protective system that prevents lighter articles such as paper, polythene bags and leaves from getting in to path of ram air approaching a heat exchanger core such as for example, a radiator core and /or condenser core.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A protection system for a heat exchanger is disclosed in accordance with an embodiment of the present invention. The protection system includes at least one net defined by a first pair of opposite sides and a second pair of opposite sides. The at least one net is deployed over at least one heat exchanger core to cover at least a portion of the at least one heat exchanger core, wherein the at least one net is secured to either one of a pair of side plates of the at least one heat exchanger core and a pair of opposite headers of the heat exchanger by a metal joining process to deploy the at least one net over the at least one heat exchanger core.

Generally, the first pair of opposite sides of the at least one net is secured to the pair of side plates of the at least one heat exchanger core.

Specifically, the at least one net is of metal and the first pair of opposite sides of the at least one net is crimped to the pair of side plates of the at least one heat exchanger core.

Alternatively, the at least one net is of metal and the first pair of opposite sides of the at least one net is brazed to the pair of side plates of the at least one heat exchanger core.

In accordance with an embodiment of the present invention, the second pair of opposite sides of the at least one net is secured to the pair of opposite headers of the heat exchanger to deploy the at least one net over the at least one heat exchanger core.

Specifically, the at least one net is of metal and the second pair of opposite sides of the at least one net is brazed to the pair of opposite headers of the heat exchanger.

Alternatively, at least one net is of metal and the second pair of opposite sides of the at least one net is crimped to the pair of opposite headers of the heat exchanger.

In accordance with the invention of the present invention, the at least one net includes a pair of first frame elements of metal integrally formed on the first pair of opposites sides thereof and crimped on the pair of side plates.

Additionally, the at least one net is of flexible material and the pair of first frame elements of metal is secured on the first pair of opposites sides of the at least one net by stamping and pressing, the pair of first frame elements is crimped on the pair of side plates.

In accordance with an embodiment, at least one net includes a pair of second frame elements of metal integrally formed on the second pair of opposite sides thereof and crimped on the pair of opposite headers of the heat exchanger.

In this embodiment, optionally the at least one net is of flexible material and the pair of second frame elements of metal is secured on the second pair of opposite sides of the at least one net by stamping and pressing, the pair of second frame elements is crimped on the pair of opposite headers of the heat exchanger.

In accordance with an embodiment which does not form part of the present invention, the at least one net is of either one of Kevlar^{®} and glass fibre material coated with Poly-tetra-fluoro-ethylene (PTFE) material.

Preferably, the at least one net is configured with plurality of spacers to maintain at least one net in a spaced apart with respect to the at least one heat exchanger core when the at least one net is deployed on the at least one heat exchanger core.

In accordance with another embodiment of the present invention, the at least one net is able to be joined to one of the side plates of the pair of side plates and one of the headers of the pair of headers to deploy the at least one net over the at least one heat exchanger core.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1** illustrates a front view of a heat exchanger depicting a heat exchanger core on which a protection system is to be deployed for protecting the heat exchanger core against damage from impact of heavier articles;
**FIG. 2a** an isometric view of a protection system in accordance with an embodiment of the present invention, wherein a first pair of opposite sides of at least one net are crimped to a pair of opposite side plates of the heat exchanger core of heat exchanger of **FIG. 1****;**
**FIG. 2b** illustrates a front view of the protection system of **FIG. 2a****;**
**FIG. 2c** illustrates a sectional view of the protection system along section line AA of **FIG. 2b****;**
**FIG. 3a** illustrates an isometric view of a protection system in accordance with another embodiment of the present invention, wherein a pair of first frame elements is integrally formed on the first pair of opposites sides of at least one net of **FIG. 2a** and is crimped to a pair of opposite side plates of a heat exchanger core;
**FIG. 3b** illustrates an isometric view of a protection system in accordance with still another embodiment of the present invention, wherein a second pair of frame elements is integrally formed on the second pair of opposite sides of the at least one net of **FIG. 2a** and is crimped to a pair of opposite headers of a heat exchanger;
**FIG. 4a** illustrates a schematic representation of a protection system in accordance with yet another embodiment of the present invention, wherein at least one net of the protection system is configured with a plurality of spacers for maintaining the at least one net at a distance from a heat exchanger core;
**FIG. 4b** illustrates a sectional view of the protection system along section line B-B of **FIG. 4a****,** also is illustrated an enlarged view depicting crimping connection between a side of a first pair of opposite sides of at least one net and a side plate of a pair of opposite side plates of a heat exchanger core, further is illustrated an enlarged view of a spacer configured on the at least one net;
**FIG. 5** illustrates an isometric view of the at least one net of the protection system of **FIG. 4a** and **FIG. 4b** configured with the spaced apart spacers in accordance with an embodiment of the present invention; and
**FIG. 6** illustrates an isometric view of a protection system in accordance with still another embodiment of the present invention, wherein second pair of opposite sides of at least one net is brazed to a pair of headers of a heat exchanger, also is illustrated an enlarged view of a brazed connection.

The present invention envisages a protection system that includes at least one net with a first pair of opposite sides thereof crimped to a pair of opposite side plates of at least one heat exchanger core, simply referred to as heat exchanger core to securely deploy the at least one net over the heat exchanger core to cover and protect the heat exchanger core against impact of heavier articles such as stones, gravel, and the likes. In accordance with an alternate embodiment of the present invention, a second pair of opposite sides of the at least one net is brazed to a pair of opposite headers of a heat exchanger to securely deploy the at least one net over the heat exchanger core to cover and protect the heat exchanger core against impact of heavier articles such as stones, gravel, and the likes. There could be other ways of deploying the at least on net over the heat exchanger core other than crimping or brazing the net to either one of the pair of side plates and the pair of headers. The protection system covers and provides protection to the at least one heat exchanger core of a vehicle, such as for example, a radiator core and/or a condenser core against impact from heavier articles such as stones, gravel, and the likes. Although, the protection system of the present invention is used in heat exchangers, such as radiators, condensers and evaporators that are used in vehicles, however, the protection system of the present invention is also applicable to be deployed on any other heat exchangers or delicate elements used in vehicular and nonvehicular applications and that require protection against impact of heavier articles such as stones and gravels striking such elements.

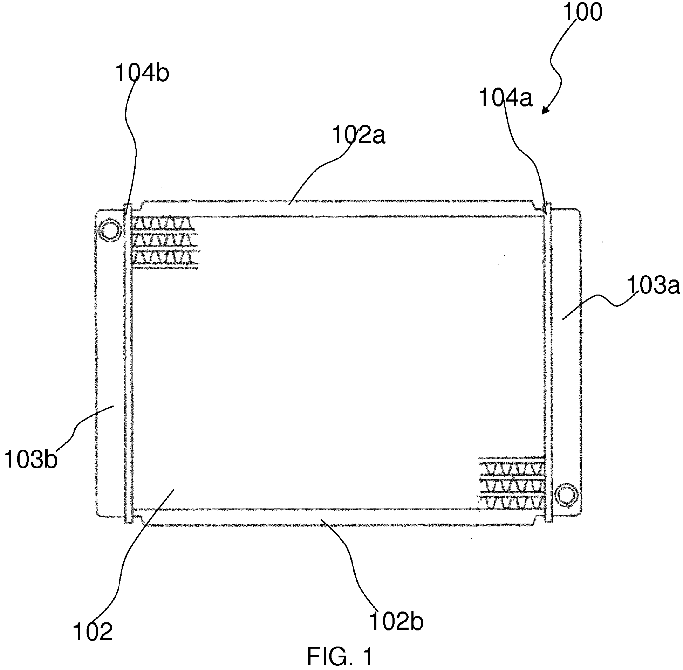

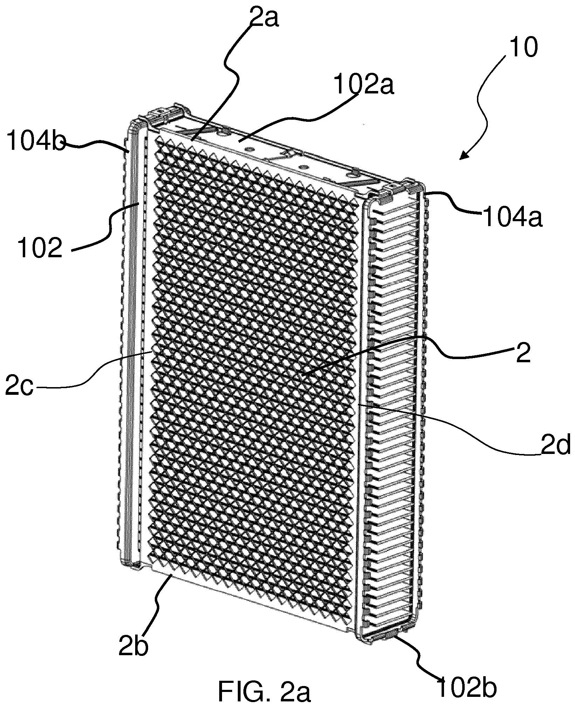

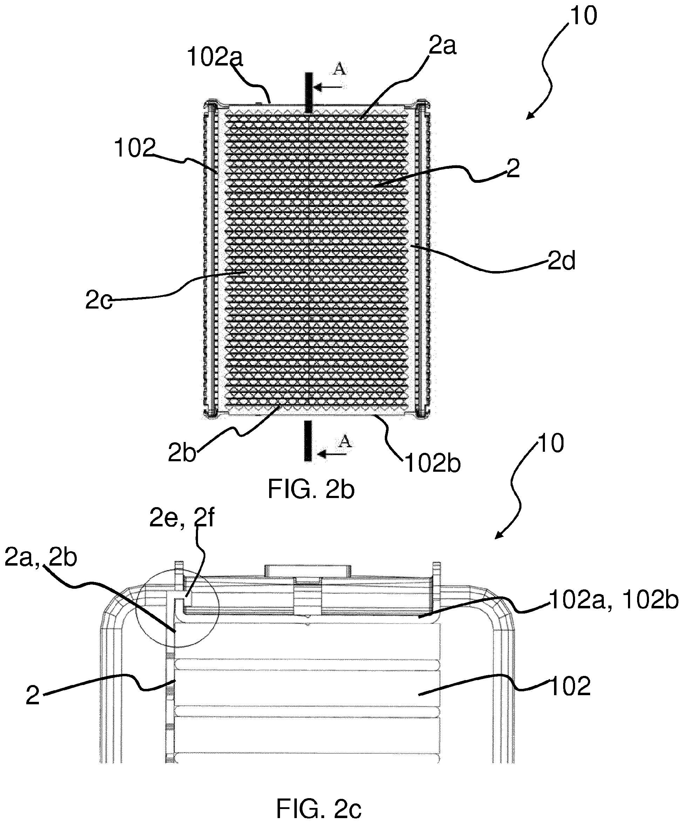

**FIG. 1** illustrates a front view of a heat exchanger **100** depicting a heat exchanger core **102** on which a protection system **10** is to be deployed for protecting the heat exchanger core **102** against damage from impact of heavier articles. **FIG. 2a****,** illustrates an isometric view of the protection system **10** in accordance with an embodiment of the present invention, wherein at least one net **2** of metal is deployed over the heat exchanger core **102** to cover and protect the heat exchanger core **102** against damage from impact of heavier articles, such as for example stones. The at least one net **2** is of meshed configuration and a first pair of opposite sides **2a, 2b** and a second pair of opposite sides **2c, 2d** define the boundary of the at least one net **2.** For deploying the at least one net **2** over the heat exchanger core **102,** the at least one net **2** is secured to either one of a pair of opposite side plates **102a, 102b** of the heat exchanger core **102** and a pair of opposite headers **104a, 104b** of the heat exchanger by a metal joining process such as for example brazing or crimping to deploy the at least one net **2** over the heat exchanger core **102.** The first pair of opposite sides **2a, 2b** of at least one net **2** is crimped to the pair of side plates, particularly, the pair of opposite side plates **102a, 102b** of the heat exchanger core **102** as illustrated in **FIG.2b** and **FIG. 2c****.** Specifically, one of the first pair of opposite sides **2a, 2b** is crimped to one of the opposite side plates **102a, 102b,** whereas the other side of the first pair of opposite sides **2a, 2b** is crimped to the remaining of the opposite side plates **102a, 102b** for deploying the at least one net **2** over the heat exchanger core **102.** **FIG. 2c** illustrates a sectional view of the protection system **10** along section line AA, wherein one of the first pair of opposite sides **2a, 2b** is depicted crimped on one of the opposite side plates **102a, 102b.** Particularly, tabs **2e, 2f** on one of the first pair of opposite sides **2a, 2b** are depicted in the crimped configuration for securing the one of the opposite sides **2a, 2b** of the at least one net **2** to one of the opposite side plates **102a, 102b** of the heat exchanger core **102.** In accordance with another embodiment, the first pair of opposite sides **2a, 2b** of the at least one net **2** is brazed to the opposite side plates **102a, 102b** of the heat exchanger core **102.** However, the first pair of opposite sides **2a, 2b** of the at least one net **2** can be secured to the pair of opposite side plates **102a, 102b** of the heat exchanger core **102** by any joining process, particularly, a metal joining process.

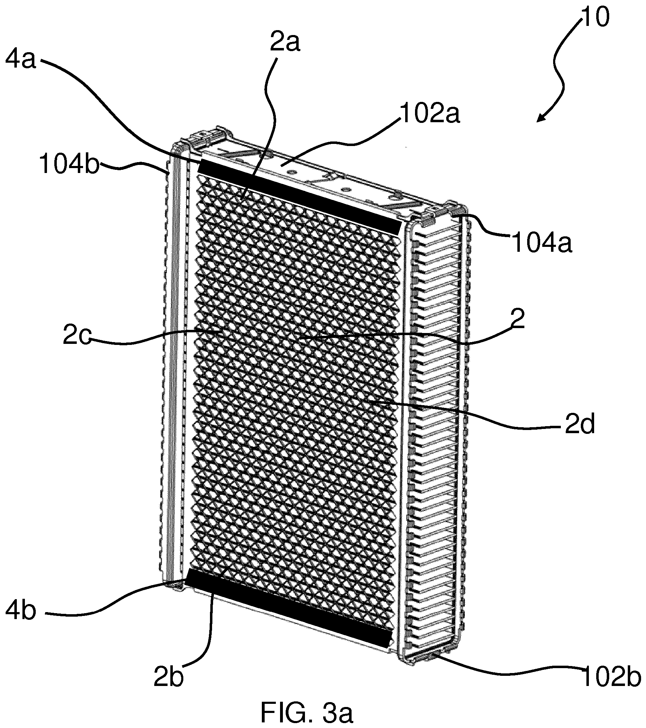

Instead of the at least one net **2** being directly mounted on the opposite side plates **102a, 102b** of the heat exchanger core **102,** the at least one net **2** can be mounted over the opposite side plates **102a, 102b** via a pair of first frame elements **4a, 4b** as illustrated in **FIG. 3a****.** Specifically, the pair of first frame elements **4a, 4b** of metal is integrally formed along the first pair of opposite sides **2a, 2b** of the at least one net **2** and the first pair of frame elements is either crimped to or brazed on the pair of opposite side plates **102a, 102b.** More specifically, one of the first frame elements **4a, 4b** integrally formed with the one side of the first pair of opposite sides **2a, 2b** of the at least one net **2** is crimped to one of the opposite side plates **102a, 102b.** Similarly, the other of first frame elements **4a, 4b** integrally formed with the other remaining side **2a, 2b** of the at least one net **2** is either crimped to or brazed on the remaining of the opposite side plates **102a, 102b** for deploying the at least one net **2** over the heat exchanger core **102.**

The first pair of opposite sides **2a, 2b** of the at least one net **2** or the pair of first frame elements **4a, 4b** integrally formed along the first pair of the opposite sides **2a, 2b** or the pair of frame elements **4a, 4b** secured along the first pair of the opposite sides **2a, 2b** can be crimped to the pair of opposite side plates **102a, 102b,** particularly, to the edges of the pair of opposite side plates **102a, 102b** before or after tanks **103a, 103b** are assembled onto brazed heat exchanger core **102.** Such configuration of the metal nets **2** crimped over the pair of opposite side plates **102a, 102b** of the heat exchanger core **102** is simple and such method for securing the at least one net **2** over the heat exchanger core **102** is convenient and quick. Further, such metal nets are easily replaceable with new net in case of damage. Still further, as the metal nets are produced in coils or sheets, the metal nets can be conveniently cut as per different dimensions of the heat exchanger core **102.**

In accordance with another embodiment, the second pair of opposite sides **2c, 2d** of the at least one net **2** is secured to the pair of headers **104a, 104b,** particularly, the pair of opposite headers **104a, 104b** of the heat exchanger by either one of crimping and brazing for deploying the at least one net **2** over the heat exchanger core **102** to cover and protect the heat exchanger core **102** against damage from impact of heavier articles, such as stones. In one embodiment, the second pair of opposite sides **2c, 2d** of the at least one net **2** is brazed to the pair of opposite headers **104a, 104b** of the heat exchanger **100.** Alternatively, the second pair of opposite sides **2c, 2d** of the at least one net **2** is crimped to the pair of opposite headers **104a, 104b** of the heat exchanger **100.** The at least one net **2** can also extend beyond the pair of opposite headers **104a, 104b** to provide protection to the corresponding pair of tanks **103a, 103b** as well along with the heat exchanger core **102.**

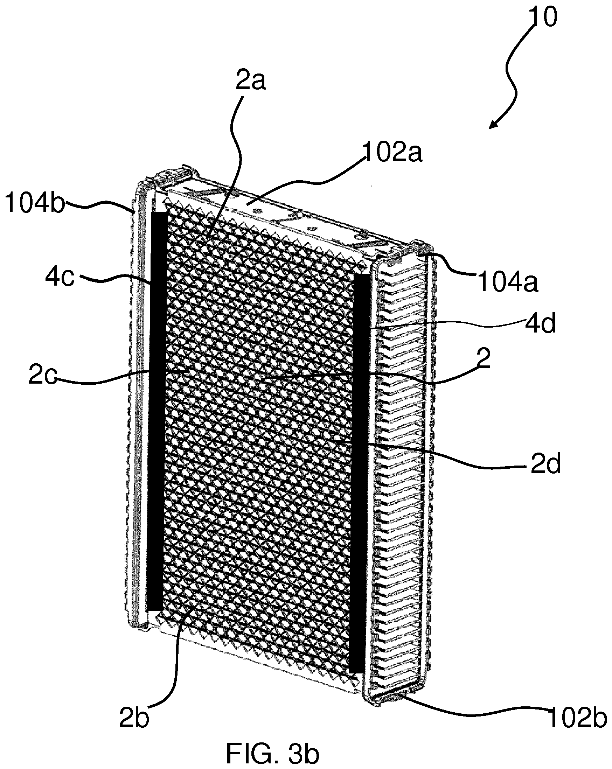

Instead of the at least one net **2** being directly mounted on the pair of opposite headers **104a, 104b,** the at least one net **2** can be mounted over the opposite headers **104a, 104b** via a pair of second frame elements **4c, 4d** as illustrated in **FIG. 3b****.** Specifically, the pair second frame elements **4c, 4d** of metal integrally formed along the second pair of opposites sides **2c, 2d** of the at least one net **2** is either brazed or crimped on the pair of opposite headers **104a, 104b.** More specifically, one of the second frame elements **4c, 4d** of metal integrally formed with the one side of the second pair of opposite sides **2c, 2d** of the at least one net **2** is crimped on the pair of opposite headers **104a, 104b.** Similarly, the other of second frame elements **4c, 4d** of metal integrally formed on the other, remaining side of the second pair of opposite sides **2c, 2d** of the at least one net **2** is crimped to the remaining of the opposite headers **104a, 104b** of the heat exchanger **100** for deploying the at least one net **2** over the heat exchanger core **102.** The net **2** can also extend beyond the pair of opposite headers **104a, 104b** to provide protection to the corresponding pair of tanks **103a, 103b** of the heat exchanger **100.**

The at least one net or grid **2** is of aluminum or steel. There are several advantages of using at least one net **2** of metal. Specifically, the protection system **10** of such configuration utilizing at least one grid or net **2** of metal is robust in construction as the metal net exhibits comparatively better endurance as compared to plastic net. Further as the metal net or grid is stronger, comparatively more or bigger holes can be configured on the metal net, that in turn prevents drawbacks associated with barrier to air flow caused by the plastic net having smaller holes disposed in front of the radiator. Further metal net or grids provide better thermal stability as compared to the plastic net. Further, such configuration of the protection system **10** eliminates the need for configuring additional engagement elements anywhere on the heat exchanger. As such the protection system **10** can be easily configured on or retrofitted over current heat exchangers, particularly, current radiators and /or condensers without requiring any modifications in the current radiators and /or condensers already configured on the vehicle. Also, at least one the net **2** being formed of metal, only metal joining process can be used for securing at least one of the pair of opposite sides of the at least one net **2** to either one of the pair of opposite side plates **102a, 102b** and the pair of headers **104a, 104b** as such the connection between the at least one net **2** of metal and either one of the pair of opposite side plates **102a, 102b** and the pair of opposite headers **104a, 104b** is rigid imparting reliability to the protection system **10.**

However, instead of the at least one net **2** being formed of metal, the at least one net **2** can be formed of a flexible material and the pair of first frame elements **4a, 4b** of metal can be secured along the first pair of opposites sides **2a, 2b** of the at least one net **2** by stamping and pressing and the pair of first frame elements **4a, 4b** is either crimped on or brazed to the pair of opposite side plates **102a, 102b.** However, the present invention is not limited to any particular configuration of the first frame elements **4a, 4b** and method for securing the first frame elements **4a, 4b** along the first pair of opposites sides **2a, 2b** of the at least one net **2** as far as the connection between the first frame elements **4a, 4b** and the at least one net **2** is secure. Specifically, one of the first frame elements **4a, 4b** secured to and forming a continuous connection with the one side of the first pair of opposite sides **2a, 2b** of the at least one net **2** is either crimped on or brazed to one of the opposite side plates **102a, 102b.** Further, the other of the first frame elements **4a, 4b** secured to and forming a continuous connection with the other, remaining side of the first pair of opposite sides **2a, 2b** of the at least one net **2** is either crimped on or brazed to the remaining of the opposite side plates **102a, 102b** for deploying the at least one net **2** over the heat exchanger core **102.**

Alternatively, in case the at least one net **2** is of flexible material, the pair of second frame elements **4c, 4d** of metal is secured on the second pair of opposite sides **2c, 2d** of the at least one net **2** by stamping and pressing and the pair of second frame elements **4c, 4d** is either crimped on or brazed to the pair of opposite headers **104a, 104b.** However, the present invention is not limited to any particular configuration of the second frame elements **4c, 4d** and method for securing the second frame elements **4c, 4d** along the second pair of opposites sides **2c, 2d** of the at least one net **2** as far as the connection between the second frame elements **4c, 4d** and the at least one net **2** is secure. Specifically, one of the second frame elements **4c, 4d** secured to and forming continuous connection with one side of the second pair of opposite sides **2c, 2d** of the at least one net **2** is either crimped on or brazed to one of the opposite headers of the pair of opposite headers **104a, 104b.** Further, the other of the second frame elements **4c, 4d** secured to and forming continuous connection with the other remaining side of the second pair of opposite sides **2c, 2d** of the at least one net **2** is either crimped on or brazed to the remaining of the opposite header of the pair of opposite headers **104a, 104b** for deploying the at least one net **2** over the heat exchanger core **102.**

Apart from above mentioned configurations of the at least one net **2** and method for deploying the at least one net **2** over the heat exchanger core **102,** there could be different configurations of the at least one net **2** and methods for securely deploying the at least one net **2** over the heat exchanger core **102.** For example, instead of the at least one net **2** being joined to either one of the pair of opposite side plates **102a, 102b** and the pair of opposite headers **104a, 104b,** the at least one net **2** can be joined to one of the side plates of the pair of opposite side plates **102a, 102b** and one of the headers of the pair of headers **104a, 104b** to deploy the at least one net **2** over the heat exchanger core **102.** Particularly, the present invention is not limited to a particular configuration of the at least one net **2** and method for securing the at least one net **2** anywhere over the heat exchanger **100** unless the at least one net **2** is capable of being deployed over the heat exchanger core **102** to cover and protect the heat exchanger core **102** against impact of heavier articles such as stones.

Also, there are advantages associated with using the at least one net **2** of flexible material with metal frames on either one of the first pair of opposite sides **2a, 2b** and the second pair of opposite sides **2c, 2d** for being either crimped on or brazed to either one of the pair of opposite headers **104a, 104b** or the pair of opposite side plates **102a, 102b** for deploying the at least one net **2** of flexible material over the heat exchanger core **102,** for example, the at least one net **2** being flexible is adjustably mounted on different heat exchanger cores **102** having slight variation in sizes to define the deployed configuration of the at least one net **2** over the different heat exchanger cores **102.** In the deployed configuration of the at least one net **2** of flexible material over the heat exchanger core **102,** the at least one net **2** is in tension and covers at least a portion of the heat exchanger core **102.** As the at least one net **2** is in tension, the heavier articles such as stones, gravel, and the likes striking the at least one net **2** bounce back away from the heat exchanger core **102,** thereby protecting the heat exchanger core **102** against the impact of the heavier articles such as stones, gravel. In accordance with another embodiment of the present invention, the at least one net **2** is of metal and is configured by at least one of stamping and pressing operations. In accordance with still another embodiment which does not form part of the present invention, the at least one net **2** is of either one of Kevlar^{®} and glass fibre material coated with Poly-tetra-fluoro-ethylene (PTFE) material and acts as a tough barrier to impacting articles. The coating of Poly-tetra-fluoro-ethylene (PTFE) material imparts flexibility to the at least one net **2.** The coating of Poly-tetra-fluoro-ethylene (PTFE) material also imparts wear resistance and abrasion resistance to the at least one net **2,** thereby extending the service life of the protection system **10.** Such configuration of the at least one net **2** of Kevlar^{®} and glass fibre material imparts high strength, high modulus, and toughness along with the thermal stability that renders the at least one net **2** suitable for such applications in which the at least one net **2** may be disposed near a heated surface of the radiator core and still exhibit high strength to withstand heavy impacts of high speed articles. In accordance with another embodiment, the at least one net **2** is configured of strands that are arranged in a criss-crossing manner with respect to each other for configuring a pattern of square shaped apertures or any other pattern as far as the apertures so configured are capable of preventing passage of an article of pre-determined size there through. However, the present invention is not limited to any particular configuration of the at least one net **2** and any particular material for configuring the at least one net **2** as far as the at least one net **2** acts as a strong barrier against impacting articles.

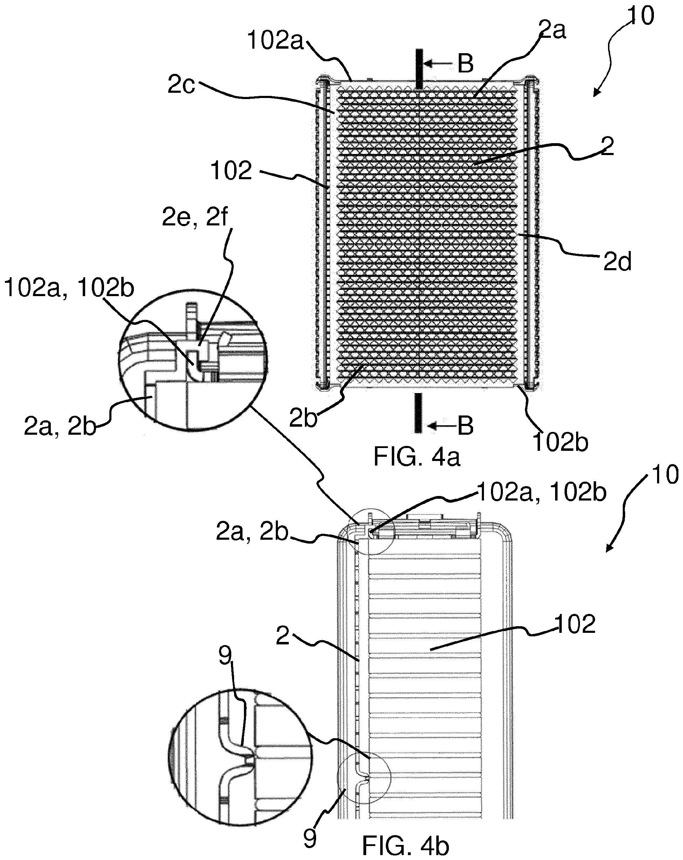

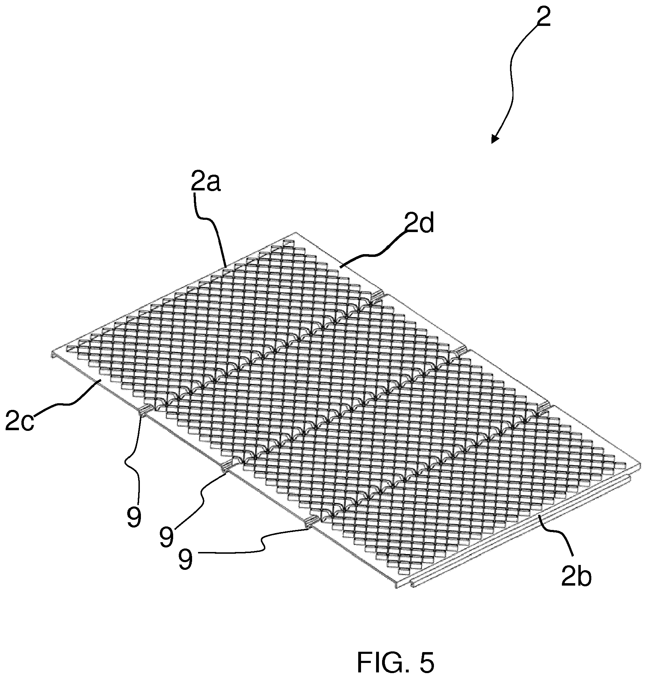

FIG. 4a - FIG. 4b, illustrate the protection system **10** in accordance with another embodiment of the present invention, wherein the least one net **2** of the protection system **10** is configured with a plurality of spacers **9** that maintains the at least one net **2** in spaced apart configuration with respect to the heat exchanger core **102,** when the at least one net **2** is deployed over the heat exchanger core **102.** The predetermined spacing is such that in all conditions the at least one net **2** remains away from the heat exchanger core **102** disposed behind the at least one net **2** and the impact energy of the heavier article cannot deform the at least one net **2** to an extent to cause the at least one net **2** to strike the heat exchanger core **102** and cause damage to the heat exchanger core **102.** The spacers **9** extend parallel to and along the length of either one of the first pair of opposite sides **2a, 2b** or either one of the second pair of opposite sides **2c, 2d.** The spacers **9** are configured by embossing, however, the present invention is not limited to any particular configuration of the spacers **9,** the placement and number of the spacers **9** and method of configuring the spacers **9,** as far as the spacers **9** are able of maintain the predetermined spacing between the at least one net **2** and the heat exchanger core **102,** when the at least one net **2** is deployed over the heat exchanger core **102.** **FIG. 4b** illustrates a sectional view of the protection system **10** along section line BB depicted in **FIG. 4a****.** Also are depicted in the **FIGS.,** an enlarged view crimping connection between one side of the first pair of opposite sides **2a, 2a** of the at least one net **02** and one side plate of the pair of opposite side plates **102a, 102b** of the heat exchanger core **102.** Also, is depicted an enlarged view depicting the spacer **9** configured on the at least one net **2** to maintain the at least one net **2** in spaced apart configuration with respect to the heat exchanger core **102.** **FIG. 5** illustrates an isometric view of the at least one net **2** of the protection system **10** configured with the spaced apart spacers **9.**

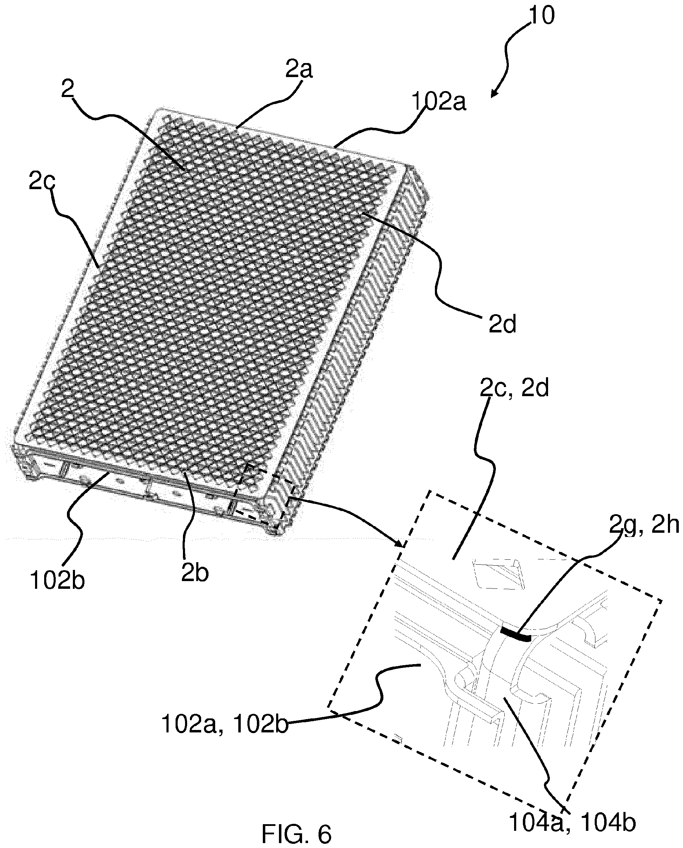

**FIG. 6** illustrates an isometric view of the protection system **10** in accordance to still another embodiment of the present invention. The protection system **10** includes at least one net **2,** wherein the second pair of opposite sides **2c, 2d** of the at least one net **2** is brazed to the pair of opposite headers **104a, 104b** of the heat exchanger **100** along brazing sites **2g, 2h** to configure secure connection between the second pair of opposite sides **2c, 2d** of the at least one net **2** and the pair of headers **104a, 104b** to deploy the at least one net **2** over the heat exchanger core **102.** Also, is illustrated an enlarged view of a brazed connection between one side of the second pair of opposite sides **2c, 2d** and one header of the pair of opposite headers, **104a 104b** of the heat exchanger **100.** In a preferred embodiment, the second pair of opposite sides **2c, 2d** of the at least one net **2** is so aligned and arranged over the pair of opposite headers **104a, 104b** that the brazing sites **2g, 2h** are disposed between the second pair of opposite sides **2b, 2c** of the at least one net **2** and the pair of opposite headers **104a, 104b** of the heat exchanger **100** and brazing occurs at the brazing sites **2g, 2h** when subjected to heat in brazing furnace to configure brazing joint between the second pair of opposite sides **2c, 2d** of the at least one net **2** and the pair of opposite headers **104a, 104b** of the heat exchanger **100.** More specifically, the brazing joint between the pair of opposite headers **104a, 104b** and the second pair of the opposite sides **2c, 2d** of the at least one net **2** is formed along with the brazing between the heat exchange tubes and the fins, the pair of opposite headers **104a, 104b** and the pair of opposite side plates **102a, 102b** of the heat exchanger core **102** and other elements configuring the heat exchanger **100,** when these elements are subjected to heat inside the brazing furnace, so that after the brazing process, the pair of opposite headers **104a, 104b** is secured to the heat exchanger core **102,** the pair of opposite side plates **102a, 102b** are secured to the pair of opposite headers **104a, 104b** and the at least one net **2** is secured to the pair of opposite headers **104a, 104b** in a single step to form a one piece construction of at least one net **2** secured to and covering the heating exchanger core **102** with the pair of opposite side plates **102a, 102b** secured to the pair of opposite headers **104a, 104b.**

Several modifications and improvement might be applied by the person skilled in the art to the protection system as defined above and such modifications and improvements will still be considered within the scope of the present invention, as long as it includes at least one net defined by a first pair of opposite sides and a second pair of opposite sides. The at least one net is deployed over at least one heat exchanger core to cover at least a portion of the at least one heat exchanger core, wherein the at least one net is secured to either one of a pair of side plates of the at least one heat exchanger core and a pair of opposite headers of the heat exchanger by a metal joining process to deploy the at least one net over the at least one heat exchanger core

In any case, the invention cannot and should not be limited to the embodiments specifically described in this document, as other embodiments might exist. The invention shall spread to any equivalent means and any technically operating combination of means.

## Claims

1. A protection system (10) for a heat exchanger (100), said protection system (10) comprising at least one net (2) defined by a first pair of opposite sides (2a, 2b) and a second pair of opposite sides (2c, 2d), said at least one net (2) adapted to be deployed over at least one heat exchanger core (102) to cover at least a portion of the at least one heat exchanger core (102), wherein said at least one net (2) is adapted to be secured to either one of a pair of side plates (102a, 102b) of said at least one heat exchanger core (102) and a pair of headers (104a, 104b) of said heat exchanger (100) by a metal joining process to deploy said at least one net (2) over said at least one heat exchanger core (102), wherein said at least one net (2) is of metal and said second pair of opposite sides (2c, 2d) of the at least one net (2) is adapted to be crimped to the pair of headers (104a, 104b) of the heat exchanger (100), **characterized in that** said at least one net (2) comprises a pair of first frame elements (4a, 4b) of metal integrally formed on said first pair of opposite sides (2a, 2b) thereof and adapted to be crimped on said pair of side plates (102a, 102b), wherein said at least one net (2) is of flexible material and said pair of first frame elements (4a, 4b) of metal is secured on said first pair of opposites sides (2a, 2b) of said at least one net (2) by stamping and pressing, said pair of first frame elements (4a, 4b) is adapted to be crimped on said pair of side plates (102a, 102b).

2. The protection system (10) as claimed in the previous claim, wherein said first pair of opposite sides (2a, 2b) of said at least one net (2) is adapted to be secured to said pair of side plates (102a, 102b) of said at least one heat exchanger core (102).

3. The protection system (10) as claimed in any of the preceding claims, wherein said at least one net (2) is of metal and said first pair of opposite sides (2a, 2b) of the at least one net (2) is adapted to be crimped to said pair of side plates (102a, 102b) of said at least one heat exchanger core (102).

4. The protection system (10) as claimed in claim 1 or 2, wherein said at least one net (2) is of metal and said first pair of opposite sides (2a, 2b) of the at least one net (2) is adapted to be brazed to said pair of side plates (102a, 102b) of said at least one heat exchanger core (102).

5. The protection system (10) as claimed in any of the preceding claims, wherein said second pair of opposite sides (2c, 2d) of said at least one net (2) is adapted to be secured to said pair of headers (104a, 104b) of said heat exchanger (102) to deploy said at least one net (2) over said at least one heat exchanger core (102).

6. The protection system (10) as claimed in any of the preceding claims, wherein said at least one net (2) is of metal and said second pair of opposite sides (2c, 2d) of the at least one net (2) is adapted to be brazed to the pair of headers (104a, 104b) of the heat exchanger (100).

7. The protection system (10) as claimed in the any of the preceding claims, wherein said at least one net (2) comprising a pair of second frame elements (4c, 4d) of metal integrally formed on said second pair of opposites sides (2c, 2d) thereof and adapted to be crimped on said pair of headers (104a, 104b) of the heat exchanger (100).

8. The protection system (10) as claimed in the claim 8, wherein said at least one net (2) is of flexible material and said pair of second frame elements (4c, 4d) of metal is secured on said second pair of opposite sides (2c, 2d) of said at least one net (2) by stamping and pressing, said pair of second frame elements (4c, 4d) is adapted to be crimped on said pair of headers (104a, 104b) of the heat exchanger (100).

9. The protection system (10) as claimed in any of the preceding claims, wherein said at least one net (2) is configured with plurality of spacers (9) adapted to maintain at least one net (2) in a spaced apart configuration with respect to said at least one heat exchanger core (102), when the at least one net (2) is deployed on said at least one heat exchanger core (102).

10. The protection system (10) as claimed in any of the preceding claims, wherein said at least one net (2) being able to be joined to one of said side plates of said pair of side plates (102a, 102b) and one of said headers of said pair of headers (104a, 104b) to deploy said at least one at least one net (2) over said heat exchanger core (102).

## Patentansprüche

1. Schutzsystem (10) für einen Wärmetauscher (100), wobei das Schutzsystem (10) mindestens ein Netz (2) umfasst, das durch ein erstes Paar von gegenüberliegenden Seiten (2a, 2b) und ein zweites Paar von gegenüberliegenden Seiten (2c, 2d) definiert ist, wobei das mindestens eine Netz (2) dazu ausgelegt ist, über mindestens einem Wärmetauscherkern (102) ausgebreitet zu werden, um zumindest einen Abschnitt des mindestens einen Wärmetauscherkerns (102) abzudecken, wobei das mindestens eine Netz (2) dazu ausgelegt ist, an einem eines Paars von Seitenplatten (102a, 102b) des mindestens einen Wärmetauscherkerns (102) und eines Paars von Sammlern (104a, 104b) des Wärmetauschers (100) durch einen Metallfügeprozess befestigt zu sein, um das mindestens eine Netz (2) über dem mindestens einen Wärmetauscherkern (102) auszubreiten, wobei das mindestens eine Netz (2) aus Metall besteht und das zweite Paar von gegenüberliegenden Seiten (2c, 2d) des mindestens einen Netzes (2) dazu ausgelegt ist, an das Paar von Sammlern (104a, 104b) des Wärmetauschers (100) gequetscht zu sein, **dadurch gekennzeichnet, dass** das mindestens eine Netz (2) ein Paar von ersten Rahmenelementen (4a, 4b) aus Metall umfasst, das integral auf dem ersten Paar von gegenüberliegenden Seiten (2a, 2b) davon ausgebildet und dazu ausgelegt ist, auf das Paar von Seitenplatten (102a, 102b) gequetscht zu sein, wobei das mindestens eine Netz (2) aus einem flexiblen Material besteht und das Paar von ersten Rahmenelementen (4a, 4b) aus Metall an dem ersten Paar von gegenüberliegenden Seiten (2a, 2b) des mindestens einen Netzes (2) durch Stanzen und Pressen befestigt ist, wobei das Paar von ersten Rahmenelementen (4a, 4b) dazu ausgelegt ist, an das Paar von Seitenplatten (102a, 102b) gequetscht zu sein.

2. Schutzsystem (10) nach dem vorhergehenden Anspruch, wobei das erste Paar von gegenüberliegenden Seiten (2a, 2b) des mindestens einen Netzes (2) dazu ausgelegt ist, an dem Paar von Seitenplatten (102a, 102b) des mindestens einen Wärmetauscherkerns (102) befestigt zu sein.

3. Schutzsystem (10) nach einem der vorhergehenden Ansprüche, wobei das mindestens eine Netz (2) aus Metall besteht und das erste Paar von gegenüberliegenden Seiten (2a, 2b) des mindestens einen Netzes (2) dazu ausgelegt ist, an das Paar von Seitenplatten (102a, 102b) des mindestens einen Wärmetauscherkerns (102) gequetscht zu sein.

4. Schutzsystem (10) nach Anspruch 1 oder 2, wobei das mindestens eine Netz (2) aus Metall besteht und das erste Paar von gegenüberliegenden Seiten (2a, 2b) des mindestens einen Netzes (2) dazu ausgelegt ist, an das Paar von Seitenplatten (102a, 102b) des mindestens einen Wärmetauscherkerns (102) gelötet zu sein.

5. Schutzsystem (10) nach einem der vorhergehenden Ansprüche, wobei das zweite Paar von gegenüberliegenden Seiten (2c, 2d) des mindestens einen Netzes (2) dazu ausgelegt ist, an dem Paar von Sammlern (104a, 104b) des Wärmetauschers (102) befestigt zu sein, um das mindestens eine Netz (2) über dem mindestens einen Wärmetauscherkern (102) auszubreiten.

6. Schutzsystem (10) nach einem der vorhergehenden Ansprüche, wobei das mindestens eine Netz (2) aus Metall besteht und das zweite Paar von gegenüberliegenden Seiten (2c, 2d) des mindestens einen Netzes (2) dazu ausgelegt ist, an das Paar von Sammlern (104a, 104b) des Wärmetauschers (100) gelötet zu sein.

7. Schutzsystem (10) nach einem der vorhergehenden Ansprüche, wobei das mindestens eine Netz (2) ein Paar von zweiten Rahmenelementen (4c, 4d) aus Metall umfasst, das integral an dem zweiten Paar von gegenüberliegenden Seiten (2c, 2d) davon ausgebildet und dazu ausgelegt ist, an das Paar von Sammlern (104a, 104b) des Wärmetauschers (100) gequetscht zu sein.

8. Schutzsystem (10) nach Anspruch 8, wobei das mindestens eine Netz (2) aus einem flexiblen Material besteht und das Paar von zweiten Rahmenelementen (4c, 4d) aus Metall an dem zweiten Paar von gegenüberliegenden Seiten (2c, 2d) des mindestens einen Netzes (2) durch Stanzen und Pressen befestigt ist, wobei das Paar von zweiten Rahmenelementen (4c, 4d) dazu ausgelegt ist, an das Paar von Sammlern (104a, 104b) des Wärmetauschers (100) gequetscht zu sein.

9. Schutzsystem (10) nach einem der vorhergehenden Ansprüche, wobei das mindestens eine Netz (2) mit einer Mehrzahl von Abstandhaltern (9) ausgestaltet ist, die dazu ausgelegt sind, mindestens ein Netz (2) in einer beabstandeten Ausgestaltung in Bezug auf den mindestens einen Wärmetauscherkern (102) zu halten, wenn das mindestens eine Netz (2) auf dem mindestens einen Wärmetauscherkern (102) ausgebreitet ist.

10. Schutzsystem (10) nach einem der vorhergehenden Ansprüche, wobei das mindestens eine Netz (2) an eine der Seitenplatten des Paars von Seitenplatten (102a, 102b) und einen der Sammler des Paars von Sammlern (104a, 104b) gefügt werden kann, um das mindestens eine mindestens eine Netz (2) über dem Wärmetauscherkern (102) auszubreiten.

## Revendications

1. Système de protection (10) pour un échangeur de chaleur (100), ledit système de protection (10) comprenant au moins un réseau maillé (2) défini par une première paire de côtés opposés (2a, 2b) et une seconde paire de côtés opposés (2c, 2d), ledit au moins un réseau maillé (2) étant adapté pour être déployé par-dessus au moins un faisceau d'échangeur de chaleur (102) pour couvrir au moins une partie de l'au moins un faisceau d'échangeur de chaleur (102), dans lequel ledit au moins un réseau maillé (2) est adapté pour être fixé à l'une ou autre d'une paire de plaques latérales (102a, 102b) dudit au moins un faisceau d'échangeur de chaleur (102) et d'une paire de collecteurs (104a, 104b) dudit échangeur de chaleur (100) par un processus de jonction métallique pour déployer ledit au moins un réseau maillé (2) par-dessus ledit au moins un faisceau d'échangeur de chaleur (102), dans lequel ledit au moins un réseau maillé (2) est de métal et ladite seconde paire de côtés opposés (2, 2d) de l'au moins un réseau maillé (2) est adaptée pour être sertie sur la paire de collecteurs (104a, 104b) de l'échangeur de chaleur (100), **caractérisé en ce que** ledit au moins un réseau maillé (2) comprend une paire de premiers éléments cadres (4a, 4b) de métal formée de façon monobloc sur ladite première paire de côtés opposés (2a, 2b) de celui-ci et adaptée pour être sertie sur ladite paire de plaques latérales (102a, 102b), dans lequel ledit au moins un réseau maillé (2) est de matériau flexible et ladite paire de premiers éléments cadres (4a, 4b) de métal est fixée sur ladite première paire de côtés opposés (2a, 2b) dudit au moins un réseau maillé (2) par estampage et emboutissage, ladite paire de premiers éléments cadres (4a, 4b) est adaptée pour être sertie sur ladite paire de plaques latérales (102a, 102b).

2. Système de protection (10) selon la revendication précédente, dans lequel ladite première paire de côtés opposés (2a, 2b) dudit au moins un réseau maillé (2) est adaptée pour être fixée à ladite paire de plaques latérales (102a, 102b) dudit au moins un faisceau d'échangeur de chaleur (102).

3. Système de protection (10) selon l'une quelconque des revendications précédentes, dans lequel ledit au moins un réseau maillé (2) est de métal et ladite première paire de côtés opposés (2a, 2b) de l'au moins un réseau maillé (2) est adaptée pour être sertie sur ladite paire de plaques latérales (102a, 102b) dudit au moins un faisceau d'échangeur de chaleur (102).

4. Système de protection (10) selon la revendication 1 ou 2, dans lequel ledit au moins un réseau maillé (2) est de métal et ladite première paire de côtés opposés (2a, 2b) de l'au moins un réseau maillé (2) est adaptée pour être brasée sur ladite paire de plaques latérales (102a, 102b) dudit au moins un faisceau d'échangeur de chaleur (102) .

5. Système de protection (10) selon l'une quelconque des revendications précédentes, dans lequel ladite seconde paire de côtés opposés (2c, 2d) dudit au moins un réseau maillé (2) est adaptée pour être fixée à ladite paire de collecteurs (104a, 104b) dudit échangeur de chaleur (102) pour déployer ledit au moins un réseau maillé (2) par-dessus ledit au moins un faisceau d'échangeur de chaleur (102).

6. Système de protection (10) selon l'une quelconque des revendications précédentes, dans lequel ledit au moins un réseau maillé (2) est de métal et ladite seconde paire de côtés opposés (2c, 2d) de l'au moins un réseau maillé (2) est adaptée pour être brasée sur la paire de collecteurs (104a, 104b) de l'échangeur de chaleur (100).

7. Système de protection (10) selon l'une quelconque des revendications précédentes, dans lequel ledit au moins un réseau maillé (2) comprenant une paire de seconds éléments cadres (4c, 4d) de métal formée de façon monobloc sur ladite seconde paire de côtés opposés (2c, 2d) de celui-ci et adaptée pour être sertie sur ladite paire de collecteurs (104a, 104b) de l'échangeur de chaleur (100).

8. Système de protection (10) selon la revendication 8, dans lequel ledit au moins un réseau maillé (2) est de matériau flexible et ladite paire de seconds éléments cadres (4c, 4d) de métal est fixée sur ladite seconde paire de côtés opposés (2c, 2d) dudit au moins un réseau maillé (2) par estampage et emboutissage, ladite paire de seconds éléments cadres (4c, 4d) est adaptée pour être sertie sur ladite paire de collecteurs (104a, 104b) de l'échangeur de chaleur (100).

9. Système de protection (10) selon l'une quelconque des revendications précédentes, dans lequel ledit au moins un réseau maillé (2) est configuré avec une pluralité de pièces d'espacement (9) adaptées pour maintenir au moins un réseau maillé (2) dans une configuration espacée par rapport audit au moins un faisceau d'échangeur de chaleur (102), lorsque l'au moins un réseau maillé (2) est déployé sur ledit au moins un faisceau d'échangeur de chaleur (102).

10. Système de protection (10) selon l'une quelconque des revendications précédentes, dans lequel ledit au moins un réseau maillé (2) peut être joint à une desdites plaques latérales de ladite paire de plaques latérales (102a, 102b) et un desdits collecteurs de ladite paire de collecteurs (104a, 104b) pour déployer ledit au moins un au moins un réseau maillé (2) par-dessus ledit faisceau d'échangeur de chaleur (102).
